# FASCICULE DE BREVET EUROPEEN

(11) **EP 0 581 659 B1**
(45) Date de publication et mention de la délivrance du brevet: **26.03.1997**
(21) Numéro de dépôt: 93401928.2
(22) Date de dépôt: 23.07.1993
(51) Int. Cl.: G01C 23/00, G01C 21/22

(54) **Procédé d'assistance à la navigation**
Verfahren für Navigationshilfe
Process to assist navigation

(30) Priorité: 31.07.1992 FR 9209738
(43) Date de publication de la demande: 02.02.1994
(73) Titulaire: SEXTANT AVIONIQUE, F-92366 Meudon la Forêt Cédex (FR)
(72) Inventeur: Oder, Engin, F-78960 Voisins le Bretonneux (FR); Pierre, Francine, F-75003 Paris (FR); Renouard, Jean-Marie, F-92210 Saint Cloud (FR)
(74) Mandataire: de Saint-Palais, Arnaud Marie

(56) Documents cités:
- GB-A- 2 249 417
- Proceedings of the IEEE 1986 National Aerospace and Electronics Conference NAECON 1986, Dayton, Ohio, EUA, 19-23 Mai 1986, W.H.DANA et al.:"Pilot Vehicle Interface on the Advanced Fighter Technology Integration F-16", Vol.2, pages 595-607.* pages 604-606, paragraphe :"Color Moving Map"; figures 13-15*.
- AVIATION WEEK AND SPACE TECHNOLOGY vol. 109, no. 6, Août 1978, NEW YORK US pages 53 - 58 K.J.STEIN 'Horizontal Situation Display Readied'

## Description

La présente invention concerne un procédé et un dispositif d'assistance à la navigation à bord d'un véhicule, comme par exemple, un aérodyne, destiné plus particulièrement à faciliter les tâches de navigation à partir de cartes de navigation et de toute la documentation associée.

Elle s'applique notamment, mais non exclusivement, à l'aviation civile et commerciale, où les techniques actuelles de navigation font appel à des cartes de navigation aérienne imprimées, indiquant à la fois les aéroports, les routes aériennes, les balises de radio-navigation, en plus des informations non spécifiques à la navigation aérienne. Ces cartes présentent de nombreux inconvénients :
- leur format est trop important pour une manipulation aisée dans l'espace réduit d'un poste de pilotage ;
- elles ne permettent pas d'accéder instantanément à la portion de carte où se trouve l'aérodyne,
- elles ne permettent pas d'accéder instantanément à toutes les informations nécessaires à la navigation, comme par exemple, les informations détaillées concernant un aéroport ou une balise de radio-navigation ;
- leur échelle est soit trop petite pour pouvoir présenter lisiblement toutes les informations nécessaires, soit trop grande pour afficher une portion de trajectoire suffisamment grande par rapport à la vitesse moyenne des aérodynes utilisés sur les lignes régulières ;
- les informations présentées ne sont pas toutes utiles pour un vol donné, ces cartes présentant les informations utiles pour toutes les routes possibles dans la zone géographique représentée ;
- les informations présentées sont figées et ne peuvent pas être mises à jour facilement ; et
- leur consultation de la carte est difficile dans une ambiance nocturne.

Le document GB-A-2 249 417 décrit un système de gestion documentaire à base de processeurs pour la navigation à bord d'un avion avec un terminal de communication incluant une surface de visualisation, des mémoires où sont stockées des données pour l'affichage des cartes de navigation, et des capteurs pour l'acquisition de la position de l'avion. Sur une carte de fond affichée peuvent ètre superposées une portion de la trajectoire calculée jusqu'à la position réelle de l'avion et des symboles représentant des objets de navigation (des aéroports, des "VORs" ou des aides de navigation) à leur position correspondante sur la carte de fond. Au moyen du terminal de communication l'opérateur peut sélectionner des ensembles des objets de navigations ou choisir l'echelle de la carte ou la portion de la carte à afficher. Le système est programmé pour choisir, parmi les informations relatives à l'ensemble d'objets sélectionnés, les informations relatives aux objets localisés dans la zone géographique correspondant à la portion affichée. Enfin, le système permet à l'opérateur la sélection d'un des ensembles d'objets affichés pour activer un "moyen d'exploitation" ou programme associé à cet ensemble d'objets : en particulier, le système est programmé pour accepter des signaux de contrôle du terminal de communication afin de sélectionner un des objets pour l'affichage des informations textuelles ou navigationnelles sur l'objet sélectionné.

L'invention a pour but d'alléger les tâches de navigation que doit effectuer l'équipage au cours d'un vol.

Elle propose, à cet effet, un procédé d'assistance à la navigation à bord d'un véhicule utilisant un système de gestion documentaire à base de processeurs comprenant au moins un terminal de communication incluant une surface de visualisation, et des mémoires de stockage d'une base de données où sont stockées notamment toutes les informations nécessaires à la navigation.

Selon l'invention, ce procédé utilise des mémoires, ou sont stockées une image sous forme numérisée représentant une carte géopolitique de la région susceptible d'être traversée par le véhicule, et des informations relatives à une multiplicité d'objets de natures différentes localisés dans ladite région, ces informations comprenant pour chaque objet, des symboles représentatifs de la nature de l'objet, une position géographique, et un ensemble d'informations, ces objets étant répartis en fonction de leurs natures respectives, en ensembles d'objets associés respectivement à des moyens distincts d'exploitation des ensembles d'informations, ladite image étant stockée sous la forme d'au moins un fichier numérique associé à un fichier permettant de repérer sur la carte des zones rectangulaires et des fichiers permettant d'y repérer des segments de droite d'orientation quelconque, chaque moyen d'exploitation exécutant une séquence d'étapes et définissant pour chaque étape les informations à présenter à l'écran, le mode de présentation de ces informations, et les touches actives du terminal ainsi que leur fonction, ledit procédé comprenant :
- l'acquisition en temps réel de la position géographique du véhicule ;
- l'introduction de la trajectoire à parcourir depuis la position actuelle du véhicule, jusqu'à la position de destination ;
- la détermination périodique d'une portion de l'image numérisée, représentant une zone géographique qui inclue à la fois la position actuelle du véhicule et une portion significative de la trajectoire à parcourir ;
- l'affichage sur la surface de visualisation , de la portion d'image ainsi déterminée, et de symboles représentant ladite portion de trajectoire ;
- l'affichage en temps réel, en surimpression, sur ladite surface de visualisation, d'un symbole représentant le véhicule, en respectant sa position géographique par rapport à ladite zone géographique ;
- la sélection par l'opérateur d'au moins un ensemble d'objets ;
- la sélection par le système, parmi les informations relatives à l'ensemble d'objets sélectionné, des informations relatives aux objets localisés dans ladite zone géographique ;
- l'affichage en surimpression sur ladite portion d'image, des symboles représentatifs des objets ainsi sélectionnés, en respectant leur position géographique par rapport à ladite zone géographique ; et
- la sélection par l'opérateur d'un des ensembles d'objets présents sur la surface de visualisation, et l'activation du moyen d'exploitation associé à cet ensemble d'objets.

Des moyens peuvent en outre être prévus pour indiquer à l'utilisateur qu'une information présentée est modifiée par un "NOTAM".

A cet effet, deux méthodes sont offertes à l'utilisateur :
1) Si le "NOTAM" modifie un élément indiqué, un icône (ou similaire) incite à appuyer sur une touche "NOT" qui fait apparaître le texte concerné.
2) Il est possible, après avoir sélectionné une fonction "NOTAM" de faire apparaître les "dormantes NOTAM" (NOTAM modifiant des informations non présentes à l'écran) et, par le curseur, on peut désigner les emplacements que l'on désire consulter.

L'image numérisée utilisée peut représenter une carte, par exemple, à l'échelle de un centimètre pour cinquante kilomètres, et comporter uniquement les zones d'altitudes élevées, les surfaces aquatiques, les grandes villes, les principales voies de communications terrestres et les frontières d'états.
Malgré la faiblesse de l'échelle utilisée, la densité des informations ainsi présentées est suffisamment faible pour que cette carte soit lisible.
De cette façon, il est possible de positionner une portion relativement grande de la trajectoire de l'aérodyne, compte tenu de sa vitesse, sur la portion de carte affichée.
Ainsi, même dans le cas des aérodynes les plus rapides, le pilote aura une vision de la trajectoire future de l'aérodyne et de son environnement, et ce, sur des distances suffisamment importantes pour qu'il bénéficie d'une certaine sécurité et d'un certain confort.

Dans le cadre de la navigation aérienne, les ensembles d'objets présentés en surimpression sur l'image de la carte peuvent être les suivants :
- les balises de radio-navigation,
- les zones particulières, et les délimitations des zones de même fréquence radio,
- les routes aériennes,
- les points d'altitudes élevées, et en particulier, ceux situés à une altitude supérieure à celle de l'aérodyne,
- les aéroports, ...
et pour les aérodynes équipés d'une liaison radio, telle que "data link" :
- les données météorologiques comme les courbes isobares en fonction de l'altitude, et les images de masses nuageuses,
- les positions respectives des autres aérodynes survolant la même zone géographique, ...

Par rapport aux cartes de navigation classiques, ce procédé permet ainsi de sélectionner les objets que l'on désire voir figurer sur la portion de carte affichée sur la surface de visualisation, à la fois en fonction de leur nature et de leur proximité avec la position actuelle du véhicule, et également en fonction d'autres critères comme la trajectoire introduite dans le système.
Cette caractéristique autorise d'autant plus l'utilisation de petites échelles de représentation.

Comme dans le cas de données météorologiques, les informations visualisées peuvent être provisoires.

Selon une particularité de l'invention, le procédé comprend également :
- l'activation d'un moyen de désignation associé à l'un des ensembles d'objets affichés sur la surface de visualisation, et que l'opérateur peut déplacer sur l'écran à sa guise,
- la désignation, par l'opérateur, à l'aide du moyen de désignation, d'un symbole représentant un objet, et l'affichage en plein écran ou dans une fenêtre en surimpression sur l'image affichée, des informations relatives à l'objet sélectionné.

Avantageusement, ce procédé comprend également :
- la mémorisation des fenêtres affichées à l'écran dans une zone mémoire prévue à cet effet, et
- l'affichage en surimpression sur l'image présente sur la surface de visualisation du contenu de cette zone mémoire, sur demande du pilote.

Grâce à cette disposition, l'opérateur peut composer une image qu'il peut afficher à tout instant, dans laquelle il a lui-même rassemblé les informations qu'il a souvent besoin de consulter.

Selon une autre particularité de l'invention, les différents moyens d'exploitation associés aux ensembles d'objets comprennent également :
- des outils d'optimisation de la route en fonction des conditions météorologiques,
- des outils d'aide à la décision permettant notamment de déterminer le meilleur aéroport vers lequel se diriger en fonction de contraintes de temps et de carburant, et de la position courante de l'aérodyne, et
- des outils de calculs de navigation pour calculer par exemple la distance et le cap entre deux points.

Les résultats fournis par ces moyens sont avantageusement affichés sur demande de l'opérateur, en surimpression sur l'image présente sur la surface de visualisation.

Ces différentes caractéristiques permettent d'aboutir à un procédé d'assistance à la navigation particulièrement ergonomique et adapté au contexte de l'aviation.

Le procédé selon l'invention est mis en oeuvre sur un terminal de communication comprenant un écran rectangulaire et des touches réparties à la périphérie de l'écran.
Ces touches sont reconfigurables en fonction de la page affichée à l'écran, chacune des touches étant associée à une zone adjacente de l'écran où peut être affichée la fonction qui lui est affectée.

Le fait de répartir les touches autour d'un écran présente de nombreux avantages, notamment du point de vue de son encombrement, ce qui est particulièrement appréciable dans l'espace réduit d'un poste de pilotage.

Cette disposition des touches permet d'obtenir un ensemble de touches entièrement reconfigurable en fonction, par exemple, de la page affichée à l'écran, les fonctions de chaque touche pouvant être affichées à l'écran simultanément, indépendamment des noms des fonctions principales du terminal qui figurent sur les touches qui leur sont affectées.

Ce terminal offre deux modes de visualisation des cartes, un mode diurne et un mode nocturne. Cette caractéristique permet une consultation des cartes sans éblouissement quelque soit l'ambiance lumineuse, tout en conservant la symbologie des couleurs.

Un mode de mise en oeuvre du procédé selon l'invention sera décrit ci-après, à titre d'exemple non limitatif, avec référence aux dessins annexés dans lesquels :
la figure 1 est une représentation schématique de l'architecture du système comprenant une unité centrale à laquelle sont connectés des unités de stockage et des terminaux de communication ;
les figures 2 à 5 représentent un terminal de communication et différents écrans enchaînés par le système, durant le déroulement du procédé selon l'invention.

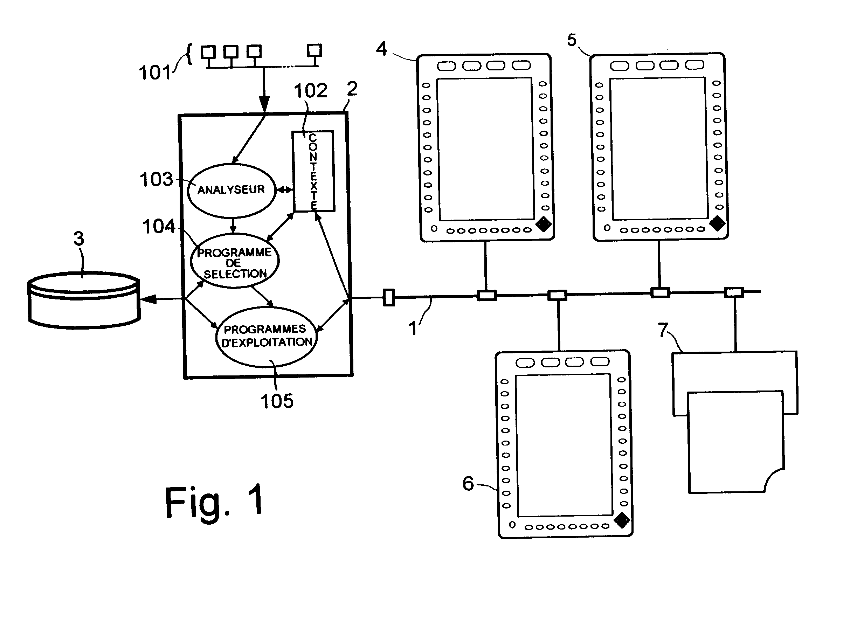

Le schéma représenté sur la figure 1 montre un exemple d'architecture d'un système destiné à être embarqué à bord d'un avion de ligne, et mettant en oeuvre le procédé d'assistance à la navigation aérienne.

Ce système est constitué d'un réseau local 1 sur lequel sont connectés :
- une unité centrale 2 gérant les accès au réseau local et à la mémoire de masse 3 qui peut être constituée de plusieurs unités de type disque magnétique, optique ou magnéto-optique,
- des terminaux de communication 4,5,6, adaptés à une utilisation à bord d'un avion de ligne, et en particulier dans le poste de pilotage où l'espace disponible est relativement réduit, et
- une imprimante 7 offrant à l'opérateur la possibilité d'imprimer l'image visualisée à l'écran.

L'unité centrale 2 est raccordée par l'intermédiaire des bus de l'avion à l'ensemble 101 des capteurs et des systèmes électroniques embarqués, pour acquérir en temps réel les données disponibles sur les autres équipements de bord, notamment, la position géographique et l'altitude de l'avion, les données météorologiques concernant le vol, et la position et l'altitude des autres avions situés à proximité.

La mémoire de masse 3 permet de stocker sous forme de base de données, l'ensemble des informations que l'on trouve normalement sous forme d'imprimés dans le poste de pilotage d'un avion de ligne. Ces informations concernent notamment :
- la documentation associée à chaque aéroport de la zone géographique traversée, et comprenant notamment la description des procédures de décollage et d'atterrissage,
- les manuels et les cartes de navigation de la zone géographique traversée, ...

Les images comme les cartes de navigation sont stockées sous forme fichiers numériques dans la base de données. Pour pouvoir être exploitées de manière à y superposer des symboles représentant des objets liés à la navigation comme les balises de radio-navigation, ou les aéroports, chaque fichier contenant une carte est associé à un fichier "tag" permettant de repérer sur la carte, des zones rectangulaires, et des fichiers "vecteurs" permettant d'y repérer des segments de droite d'orientation quelconque.

Cette base de données est associée à un ensemble de programmes d'exploitation 105 des données qu'elle regroupe. Ces programmes sont conçus notamment pour faciliter les tâches de navigation.

Ces programmes 105 constituent la traduction en langage informatique des différents scénarios suivant lesquels les informations de la base de données vont être exploitées, et enchaînées les unes avec les autres.
Ils définissent notamment pour chaque étape d'exploitation :
- les informations à présenter à l'écran,
- le mode de présentation des informations,
- les touches actives du terminal et leurs fonctions respectives, c'est-à-dire, les programmes respectifs à exécuter.

L'unité centrale 2 met en oeuvre un programme dit "analyseur" 103 qui est activé lors de l'arrivée d'un événement en provenance, soit de l'environnement 101 du système, soit de l'un des terminaux 4,5,6, engendré par un opérateur lorsqu'il enfonce une touche. Ce programme a pour but d'analyser les événements qui surviennent pour gérer un ensemble de variables qui définissent le contexte temps réel 102 dans lequel se trouve l'avion. Dans le but d'analyser finement des situations complexes, il peut être conçu suivant le modèle d'un système expert, comportant une base de connaissances, une base de règles et un moteur d'inférence.

Les variables du contexte temps réel 102 concernent notamment :
- la description du vol en cours (aéroport, de départ, de destination et de dégagement, route),
- la phase de vol en cours,
- la situation de l'avion (position, altitude, vitesse),
- les pannes détectées, ...

A chaque modification du contexte temps réel 102, l'analyseur 103 déclenche un programme de sélection 104 qui, en fonction du contexte temps réel 102, établit des liens privilégiés entre les informations de la base de données les mieux adaptées aux besoins de l'équipage résultant du nouveau contexte temps réel 102, et les programmes d'exploitation 105.

Lorsqu'un opérateur déclenche un programme d'exploitation 105 en actionnant une touche de fonction d'un terminal 4,5,6, le programme d'exploitation ainsi sélectionné utilise ces liens privilégiés pour exploiter en priorité les informations les mieux adaptées au contexte temps réel de l'avion. Bien entendu l'opérateur a toujours la possibilité d'accéder aux autres informations contenues dans la base de données.

Pour accéder à la base de données, les programmes de sélection 104 et d'exploitation 105 font appel aux fonctions d'un système de gestion de base de données qui peut être d'un type courant.

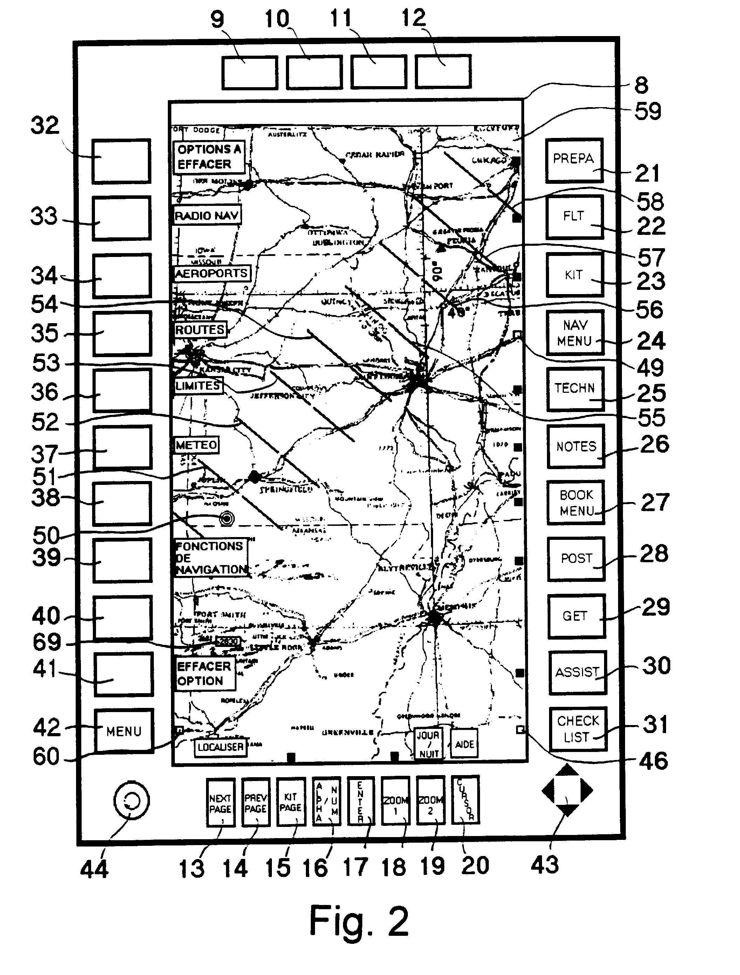

Sur la figure 2, chacun des terminaux de communication 4,5, 6, est constitué d'un écran de visualisation 8 rectangulaire autour duquel sont réparties des touches, à savoir :
- quatre touches 9 à 12 alignées le long du bord supérieur de l'écran 8,
- huit touches 13 à 20 alignées le long du bord inférieur de l'écran 8,
- onze touches alignées le long des bords droit 20 à 31 et gauche 32 à 42 de l'écran 8,
- une touche de déplacement 43, située dans le coin inférieur droit du terminal, et représentant quatre flèches pour effectuer des déplacements d'un curseur ou de l'image présente à l'écran dans toutes les directions et à vitesse variable, et
- un potentiomètre 44 situé dans le coin inférieur gauche, pour mettre le terminal sous ou hors tension et régler la luminosité de l'écran.

Certaines touches ont une fonction prédéterminée, et dans ce cas, l'intitulé de la fonction figure sur la touche.
Toutefois, ces touches peuvent être reconfigurées en fonction de la page affichée à l'écran, soit pour activer d'autres fonctions, soit pour saisir des chaînes de caractères. Dans ce cas, le nom de la fonction affectée à chaque touche ou le caractère correspondant est indiqué sur l'écran, à proximité de la touche.

Chaque touche peut prendre l'un des trois états suivants :
- un état inactivable lorsque la touche n'est affectée à aucune fonction,
- un état activable lorsque la touche permet d'activer une fonction, et
- un état actif lorsque la fonction associée à la touche est en cours d'exécution.

A proximité de chacune des touches ayant une fonction prédéterminée, se trouve un indicateur d'état, représenté par un carré sur les figures, par exemple 46,49,60, qui, lorsqu'il est allumé, indique que la touche est active (en blanc sur les figures) ou activable (en noir), selon la couleur de l'indicateur allumé, et qui, lorsqu'il est éteint (invisible sur les figures), indique que la touche est inactivable.

Les touches sur lesquelles ne figure pas de libellé de fonction sont activables lorsqu'un libellé de fonction figure sur l'écran à proximité de la touche, et inactivables dans le cas contraire.

Les touches de la colonne de droite, 21 à 31, sont affectées aux fonctions principales du système, comme par exemple, "PREPA" 21 pour la préparation de vol ou "NAV MENU" 24 pour l'assistance à la navigation.

Les touches de la colonne de gauche permettent, en général, de procéder à des sélections lorsque des menus sont affichés à l'écran.
La dernière touche de la colonne de gauche intitulée "MENU" 42 permet d'afficher le dernier menu qui a permis d'accéder à la page courante. Cette touche peut être activée plusieurs fois de suite. Dans ce cas, les différents menus enchaînés pour accéder à la page courante sont successivement affichés jusqu'au premier menu de la fonction principale correspondante.

Les touches 13 à 20 de la rangée en dessous de l'écran permettent d'activer des fonctions liées à la gestion du terminal.

Le système est conçu de manière à permettre l'introduction et la mémorisation des références des aéroports de départ et de destination, et à pouvoir déterminer la direction de la trajectoire du vol ainsi défini.

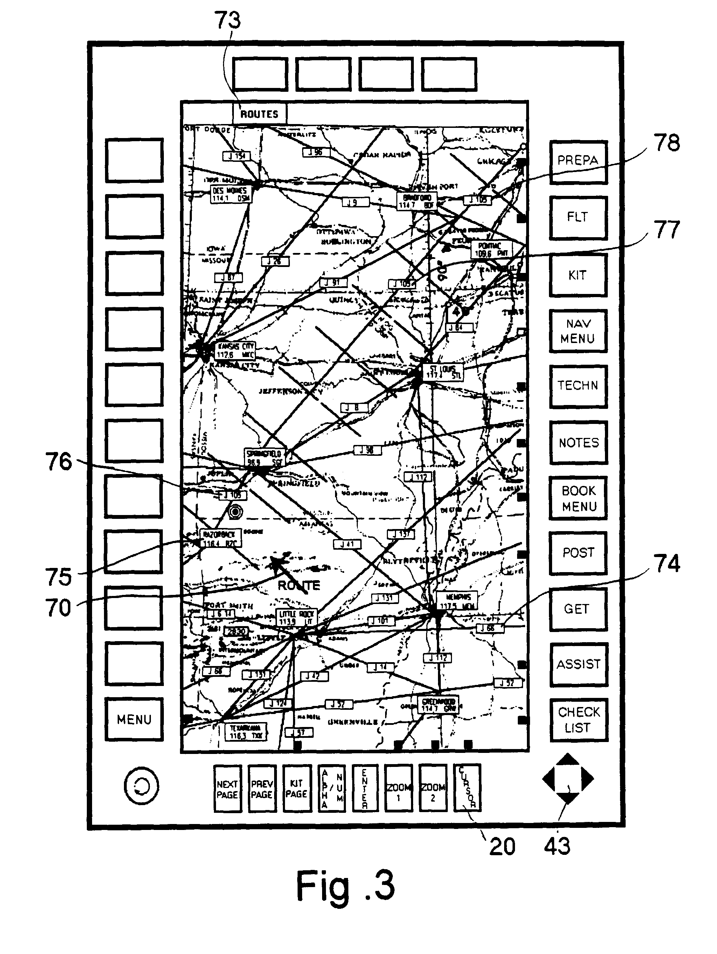

Pour activer la fonction d'assistance à la navigation, il suffit de presser la touche "NAV MENU" 24 qui passe alors à l'état actif (indiqué par un carré blanc 49 à proximité de la touche 24 sur la figure 3).

Cette action provoque l'affichage d'une portion de carte 59 représentant une zone géographique et, en surimpression, la position de l'avion 50 au moment de l'activation de cette fonction.

Cette carte indique les méridiens et les parallèles, les grandes villes, les surfaces aquatiques, les voies principales de communications terrestres, les limites d'états et les zones du relief d'altitudes les plus élevées.

En surimpression sur la carte 59, figure également la trajectoire de l'avion indiquée par des segments de droite 51 à 58 parallèles croisant perpendiculairement en leur milieu, l'axe joignant l'aéroport de départ et l'aéroport de destination. L'espacement de ces traits correspond à la distance parcourue par l'avion pendant une durée de vol constante, par exemple 10 minutes, compte tenu de la vitesse moyenne de l'avion durant les différentes phases de vol.

L'échelle des cartes utilisée est petite, par exemple, 1 centimètre pour 50 kilomètres, comme c'est le cas sur les figures, sans que la densité des informations ainsi présentées soit trop importante pour nuire à leur lisibilité.

La carte est centrée sur l'écran en fonction de la position courante de l'avion et de sa trajectoire, de manière à pouvoir présenter, à la fois, la position de l'avion et une portion de trajectoire la plus grande possible.

La combinaison de l'utilisation d'une échelle petite et du principe de centrage permet au pilote de visualiser simultanément une grande portion de la trajectoire à parcourir et de son environnement, même en tenant compte de la vitesse élevée de certains avions.

La position géographique de l'avion étant acquise en temps réel, le symbole 50 représentant l'avion sur la carte est rafraîchi en temps réel.
De même, pour que la portion de la trajectoire à parcourir affichée soit toujours la plus grande possible, la carte est recentrée périodiquement par rapport à l'écran en fonction de l'évolution de la position de l'avion.

Sur cette carte 59, figure également une signalisation en temps réel des altitudes des sommets supérieures à celle de l'avion, qui consiste en des cadres entourant les valeurs de ces altitudes, et dont la couleur est fonction de la distance entre le sommet et l'avion.

Pour faciliter leur lecture, ces cartes sont toujours orientées de manière à ce que le haut de l'écran indique le nord.
Par ailleurs, il est possible de changer le mode de visualisation diurne ou nocturne. Pour cela, il suffit de presser la touche "ASSIST" 31. A cet instant, certaines touches de la ligne en dessous de l'écran sont reconfigurées. Ainsi, la touche "ZOOM 2" 19 est reconfigurée en "JOUR/NUIT". Lorsque l'on actionne cette touche 19, tous les points noirs de l'écran deviennent blancs et les points blancs deviennent noirs. Les autres couleurs restent inchangées.
De cette manière, les informations sont affichées sur fond noir en mode nocturne, et sur fond blanc en mode diurne.
Cette disposition offre une bonne visibilité des images affichées à l'écran quelque soit l'ambiance lumineuse du poste de pilotage.

Si l'opérateur a actionné la touche "ASSIST" 30, les autres touches reconfigurées permettent de désigner un objet en donnant son nom (touche "NEXT PAGE" 13 reconfigurée en "LOCALISER"), et d'obtenir une aide sur l'utilisation du terminal (touche "CURSOR" 20 reconfigurée en "AIDE"). Si la touche "LOCALISER" 13 est actionnée, toutes les touches du terminal sont reconfigurées pour permettre la saisie d'une chaîne de caractères.

La touche "MENU" 42 permet d'afficher un menu de sélection de types d'objets spécifiques à la navigation aérienne à ajouter à la carte 59, pour constituer une carte de navigation.
Ainsi sur l'écran de la figure 2, les touches activables de la colonne située à gauche de l'écran suivantes, permettent de positionner sur la carte présente à l'écran des données spécifiques de la navigation aérienne :
- la touche 32 intitulée "OPTIONS A AJOUTER" permet à l'aide d'un menu, de sélectionner un type d'objets à afficher en surimpression sur la carte présente à l'écran,
- la touche 33 intitulée "RADIO NAV." permet d'afficher toutes les balises de radio-navigation,
- la touche 34 intitulée "AEROPORTS" permet d'afficher tous les aéroports,
- la touche 35 intitulée "ROUTES" permet de visualiser toutes les routes aériennes,
- la touche 36 intitulée "LIMITES" permet d'afficher les limites de zones de fréquence de communication et les fréquences associées,
- la touche 37 intitulée "METEO" permet d'accéder aux informations concernant la météorologie du vol, et
- la touche 39 intitulée "FONCTIONS DE NAVIGATION" permet d'accéder aux fonctions de navigation, comme par exemple, de calcul du cap et de la distance entre deux points, d'optimisation de la route en fonction des conditions météorologiques, ou de détermination du meilleur aéroport vers lequel se diriger en fonction de contraintes de temps et de carburant, et
- la touche 41 intitulée "OPTIONS A EFFACER" permet à l'aide d'un menu, de sélectionner un type d'objets à effacer de la carte présente à l'écran.

Ce menu étant affiché, la touche "MENU" 42 est à l'état actif comme l'indique son indicateur d'état 60.

Si l'une des touches 33 à 39 est actionnée sans avoir préalablement actionné la touche "OPTIONS A AJOUTER" 32, les symboles représentatifs du type d'objets sélectionné sont affichés en remplacement des symboles, s'ils existent, des objets du type précédemment sélectionné.

Sur la portion de carte 59 affichée à l'écran, les altitudes des sommets supérieures à celle de l'avion présentent une signalisation particulière : elles sont entourées d'un cadre 69 dont la couleur dépend de la distance entre l'avion et le sommet correspondant.

La carte 59 affichée à l'écran représenté sur la figure 3 a été obtenue en actionnant la touche 35 intitulée "ROUTES", puis la touche "MENU" 42 pour faire réapparaître le menu de la figure 2, et enfin la touche 33 intitulée "RADIO NAV." pour afficher les balises de radio-navigation. La carte ainsi obtenue présente les routes aériennes, intitulées par exemple "J 66" 74, et délimitées par des balises de radionavigation, comme par exemple "LITTLE ROCK" 75.

Cet écran permet notamment de définir précisément la route qui va être suivie par l'avion. Pour cela, l'opérateur active un curseur en actionnant la touche "CURSOR" 20. Cette action permet d'afficher à l'écran un menu permettant de sélectionner l'un des types d'objets représentés à l'écran, ici "route" ou "balise de radio-navigation" que l'on désire désigner. Si le type d'objets "route" est sélectionné, un curseur 70 représenté par une flèche de couleur intitulée "ROUTE" apparait au centre de l'écran.

Ce curseur peut être déplacé dans tous les sens à l'aide de la touche de déplacement 43. A chaque fois que la flèche 70 passe à proximité d'un segment représentant un tronçon de route aérienne, ce segment change de couleur.
Pour désigner un tronçon de route, il suffit d'amener la flèche 70 suffisamment proche de ce tronçon de route pour qu'il change de couleur, puis de valider à l'aide de la touche "ENTER" 17. Les tronçons de routes ainsi désignés sont représentés à l'aide d'une couleur particulière.
Lorsque le curseur 70 arrive à proximité d'un bord de l'écran 8 et que l'opérateur continue à déplacer le curseur en direction de ce bord, le curseur reste immobile tandis que l'image de la carte affichée à l'écran se déplace en direction opposée. De cette manière, il est possible de désigner un objet en dehors de la zone géographique représentée à l'écran. Pour recentrer la carte sur la position actuelle de l'avion et sa trajectoire, il suffit de presser une touche "RETURN TO REF" (touche 19).

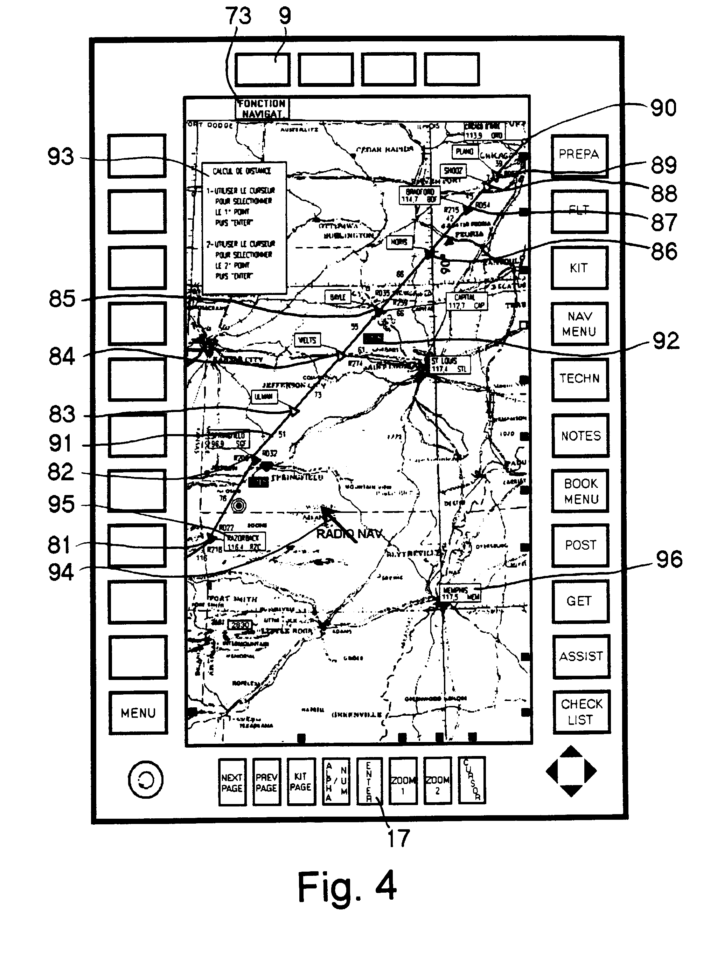

Dans l'exemple représenté sur la figure 3, l'opérateur va désigner la route "J 105" 76,77,78 qui est la plus proche de la trajectoire indiquée par les segments 51 à 58 (figure 2), ce qui permet de définir la route à suivre comme représentée sur la figure 4.

Cet écran indique la route détaillée que l'avion doit suivre pour arriver à la destination introduite lors de l'initialisation du système.
Les segments 51 à 58 indiquant la trajectoire ont disparu et sont remplacées par une ligne 80 composée de segments délimités par des points de repères 81 à 89 représentés par des triangles. Ces points de repères peuvent correspondre à une balise de radio-navigation 81, 82, 87 ou non. La destination est indiquée par un cercle 90.
A chaque segment (par exemple 91) correspond un cap ("R032") et une distance en milles nautiques ("51"). Le nom de la route "J 105" 92 est indiqué en blanc sur fond noir.

Ce résultat aurait pu être obtenu en demandant au système de déterminer la meilleure route possible en fonction des conditions météorologiques, à l'aide de l'option "FONCTIONS DE NAVIGATION" 39 du menu de la figure 2. Le système indique alors les tronçons de la route qu'il propose en en modifiant la couleur. La définition de la route à suivre peut être transférée directement à partir d'un "FMC" ("Flight Management Computer").

Lorsque l'opérateur a validé la route proposée à l'aide de la touche "ENTER" 17, ou terminé de sélectionner des tronçons de route jusqu'au point de destination, il peut faire disparaître les autres objets affichés, comme représenté sur la figure 4, en commandant l'affichage du menu de la figure 2, à l'aide de la touche "MENU" 42, puis en actionnant la touche "EFFACER OPTION". Cette opération permet d'afficher un nouveau menu permettant de sélectionner les types d'objets présents sur l'écran que l'on désire effacer, c'est-à-dire, "ROUTES" et "RADIO NAV".

A partir de cet écran notamment, il est possible d'effectuer des calculs de distance entre deux points. Pour cela, il suffit par exemple, d'afficher le menu de la figure 2 à l'aide de la touche "MENU" 42 et d'actionner la touche 33 "RADIO NAV." pour afficher toutes les balises de radio-navigation. Chacune d'elles (par exemple 96 sur la figure 4) est représentée par un cadre dans lequel figure leur nom ("MEMPHIS") et leur code ("MEM"), ainsi que leur fréquence d'émission ("117.5").

Pour activer la fonction de calcul de distance, il faut afficher à nouveau le menu qui a disparu lors de l'affichage des balises de radio-navigation, puis actionner la touche 39 "FONCTIONS DE NAVIGATION", pour pouvoir sélectionner cette fonction. Un curseur 94 affecté à la désignation des balises de radio-navigation et une fenêtre 93 indiquant la démarche à suivre apparaissent alors à l'écran (figure 4).

Cette fenêtre 93 indique qu'il faut désigner un premier point à l'aide du curseur et le valider avec la touche "ENTER" 17 puis de désigner de même un deuxième point. Le premier point peut être, soit la position de l'avion, soit une balise, tandis que le deuxième point doit être une balise.

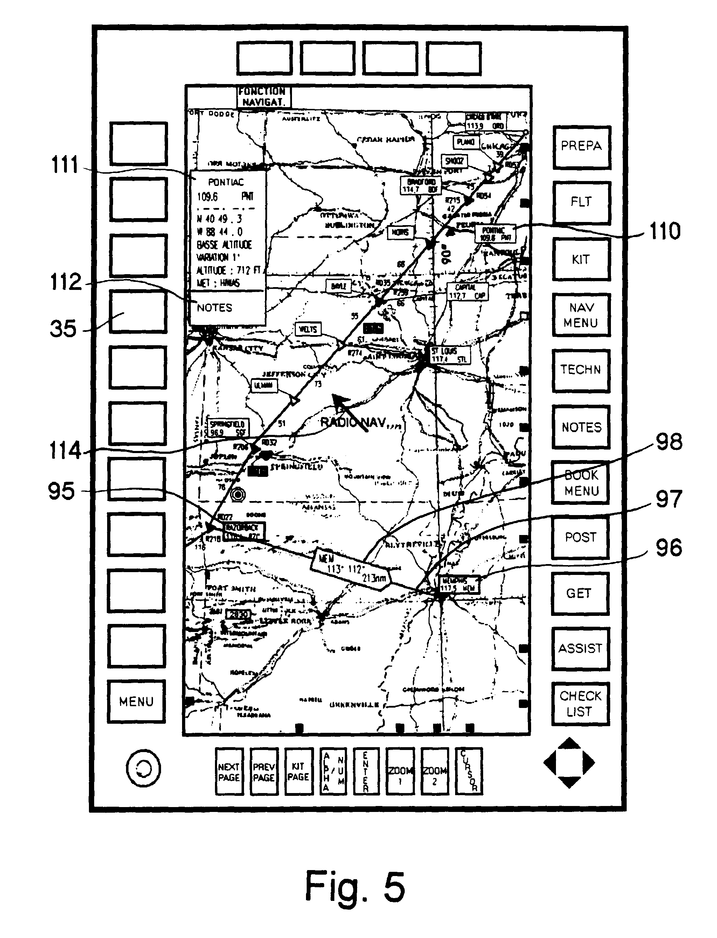

Ainsi, l'écran de la figure 5 est obtenu à partir de l'écran de la figure 4 lorsque l'opérateur a désigné comme premier point, la balise intitulée "RAZORBACK" 95, repérée par un cadre plus épais que celui des autres balises, et comme deuxième point, la balise intitulée "MEMPHIS" 96 repérée de la même façon.
Ces deux points sont reliés par un segment de droite 97 et un polygone 98 dans lequel figure le code de la destination "MEM" (deuxième point), le cap de départ "112°" et le cap de destination "113°", pour tenir compte de la déclinaison magnétique, ainsi que la distance séparant ces deux points 95,96 "213 nm" en milles nautiques.

Il est également possible de désigner un point en donnant son nom ou sa position en latitude et longitude, en actionnant la touche "ASSIST" 30, puis la touche "LOCALISER" 13 (figure 2). Toutes les touches sont alors reconfigurées pour permettre la saisie de caractères alphanumériques. De cette manière, le système fournit un moyen rapide pour désigner n'importe quel point géographique, qu'il figure dans la zone géographique représentée à l'écran ou non.

Pour accéder aux informations associées aux objets représentés sur la portion de carte affichée à l'écran, par exemple, les balises de radio-navigation, il suffit comme précédemment décrit, d'activer le curseur 114 à l'aide de la touche "CURSOR" 20, et de l'affecter aux balises de radio-navigation, à l'aide du menu qui apparaît alors. En amenant le curseur 114 sur la balise intitulée "PONTIAC" 110 dont on veut obtenir des informations détaillées, et en validant cette désignation à l'aide de la touche "ENTER" 17, une fenêtre 111 apparaît en surimpression sur la carte. Dans cette fenêtre, sont fournies les différentes informations disponibles concernant la balise désignée, comme par exemple, le signal en alphabet morse qu'elle émet, sa position géographique et son altitude. Parfois, des informations provisoires (par exemple, une période de mise hors service pour maintenance) lui sont associées, et sont accessibles par une touche (par exemple 35) de la colonne de droite de l'écran, configurée à cet effet et intitulée "NOTES" 112.

Les fenêtres affichées en surimpression sur l'écran peuvent être déplacées ou effacées. A cet effet, lorsqu'une fenêtre est présente à l'écran, deux options supplémentaires figurent dans le menu affiché lors de l'activation de la touche "CURSOR" 20. Ces deux options permettent d'affecter le curseur à la désignation d'une fenêtre, respectivement, dans le but de la déplacer et de l'effacer.

Par ailleurs, si l'opérateur actionne la touche "KIT PAGE" 15, toutes les fenêtres présentes à l'écran sont stockées dans une mémoire réservée à cet effet, dont le contenu peut être affiché à l'écran à l'aide de la seule touche "KIT" 23. Cette fonctionnalité permet à l'opérateur de rassembler dans une ou plusieurs pages d'écran accessibles rapidement, les informations qu'il juge importantes et qu'il aura besoin de consulter souvent.

D'une manière générale, lorsqu'une carte est affichée, l'opérateur a la possibilité l'agrandir à l'aide des touches "ZOOM 1" 18 et "ZOOM 2" 19 et de la déplacer par rapport à l'écran, à l'aide de la touche 43 pour visualiser une autre zone géographique.
Ces actions ont pour effet de stopper le rafraîchissement périodique de la carte et de la position de l'avion.
Il en est de même lorsque l'opérateur visualise un document en pleine écran.

Pour activer à nouveau ce rafraîchissement, il suffit d'actionner la touche "NAV MENU" 24 qui provoque l'affichage et le centrage de la dernière carte de navigation visualisée avant l'activation de ces fonctions, mais en tenant compte de la dernière position de l'avion acquise par le système et de sa trajectoire.

## Revendications

1. Procédé d'assistance à la navigation à bord d'un véhicule utilisant un système de gestion documentaire à base de processeurs comprenant au moins un terminal de communication incluant une surface de visualisation (8), et des mémoires de stockage d'une base de données où sont stockées une image numérisée représentant une carte géopolitique de la région susceptible d'être traversée par le véhicule, et des informations relatives à une multiplicité d'objets de natures différentes localisés dans ladite région, ces informations comprenant pour chaque objet, des symboles représentatifs de la nature de l'objet, une position géographique, et un ensemble d'informations, ces objets étant répartis en fonction de leurs natures respectives, en ensembles d'objets associés respectivement à des moyens distincts d'exploitation des ensembles d'informations, ladite image étant stockée sous la forme d'au moins un fichier numérique associé à un fichier permettant de repérer sur la carte des zones rectangulaires et des fichiers permettant d'y repérer des segments de droite d'orientation quelconque, chaque moyen d'exploitation exécutant une séquence d'étapes et definissant pour chaque étape les informations à présenter à l'écran, le mode de présentation de ces informations, et les touches actives du terminal ainsi que leur fonction, ledit procédé comprenant :
- l'acquisition en temps réel de la position géographique du véhicule ;
- l'introduction de la trajectoire à parcourir depuis la position actuelle du véhicule, jusqu'à la position de destination ;
- la détermination périodique d'une portion (59) de l'image numérisée, représentant une zone géographique qui inclue à la fois la position actuelle du véhicule (50) et une portion significative de la trajectoire (51 à 58) à parcourir ;
- l'affichage sur la surface de visualisation (8), de la portion (59) d'image ainsi déterminée, et de symboles représentant ladite portion (51 à 58) de trajectoire ;
- l'affichage en temps réel, en surimpression, sur ladite surface de visualisation (8), d'un symbole (50) représentant le véhicule, en respectant sa position géographique par rapport à ladite zone géographique ;
- la sélection par l'opérateur d'au moins un ensemble d'objets ;
- la sélection par le système, parmi les informations relatives à l'ensemble d'objets sélectionné, des informations relatives aux objets localisés dans ladite zone géographique ;
- l'affichage en surimpression sur ladite portion (59) d'image, des symboles représentatifs des objets ainsi sélectionnés, en respectant leur position géographique par rapport à ladite zone géographique ; et
- la sélection par l'opérateur d'un des ensembles d'objets présents sur la surface de visualisation, et l'activation du moyen d'exploitation associé à cet ensemble d'objets.

2. Procédé selon la revendication 1, comprenant :
- l'affectation d'un moyen de désignation (114) à un ensemble d'objets ;
- la désignation par l'opérateur, à l'aide dudit moyen de désignation (114), d'un symbole (110) affiché en surimpression sur ladite portion d'image (59), et représentant un objet de l'ensemble auquel le moyen de désignation est affecté ; et
- l'exploitation de l'ensemble d'informations associé à l'objet ainsi désigné, à l'aide du moyen d'exploitation associé à l'ensemble d'objets auquel cet objet appartient.

3. Procédé selon l'une des revendications précédentes, comprenant :
- la désignation par l'opérateur d'un des symboles d'objets affichés en surimpression sur ladite portion d'image (59) ;
- l'affichage par le système, soit en plein écran, soit dans une fenêtre (111) en surimpression sur la portion de carte (59), d'informations détaillées concernant l'objet désigné (110).

4. Procédé selon l'une des revendicatio**ns** précédentes,
caractérisé en ce qu'il comprend :
- l'activation d'un moyen de désignation associé aux fenêtres (111) affichées en surimpression sur l'écran (8),
- le déplacement ou l'effacement par l'opérateur, desdites fenêtres, une à une, à l'aide du moyen de désignation,
- la mémorisation des fenêtres et leur contenu dans une zone mémoire prévue à cet effet, et
- l'affichage en surimpression sur l'image affichée à l'écran (8) du contenu de cette mémoire.

5. Procédé selon l'une des revendications précédentes,
caractérisé en ce qu'il comprend :
- le calcul sur demande de l'opérateur, de la distance et du cap entre deux points géographiques désignés par l'opérateur,
- la détermination sur demande de l'opérateur, d'une route optimisée tenant compte des conditions météorologiques, entre la position actuelle du véhicule et la position de destination, et
- la détermination sur demande de l'opérateur, du meilleur aéroport vers lequel se diriger en fonction de contraintes de temps et de carburant, et de la position actuelle du véhicule.

6. Procédé selon l'une des revendications 3 à 5,
caractérisé en ce que les symboles d'objets et les informations détaillées affichées peuvent être de nature provisoire.

7. Procédé selon l'une des revendications précédentes,
caractérisé en ce qu'il comprend le déplacement par l'opérateur, de la carte affichée à l'écran, entraînant l'arrêt du rafraîchissement de cette dernière en fonction de l'évolution de la position du véhicule.

8. Procédé selon l'une des revendications précédentes,
caractérisé en ce qu'il comprend la désignation par l'opérateur de deux positions géographiques (95 et 96) sur la carte, et l'affichage par le système en surimpression sur ladite portion d'image (59), de la distance séparant ces deux positions (95 et 96), et du cap à suivre pour aller de la première position (95) à la deuxième position (96).

9. Procédé selon l'une des revendications 2 à 8,
caractérisé en ce que la désignation d'une position géographique est effectuée en introduisant son nom ou ses coordonnées géographiques.

10. Procédé selon l'une des revendications précédentes,
caractérisé en ce que la trajectoire du véhicule est indiquée par un ensemble de segments de droite (51 à 58) parallèles croisant perpendiculairement en leur milieu, l'axe joignant la position de départ et la position de destination, lesdits segments (51 à 58) étant espacés d'une distance correspondant à la distance parcourue par le véhicule pendant une durée constante à une vitesse moyenne.

11. Procédé selon l'une des revendications précédentes,
caractérisé en ce que la carte numérisée provient d'une carte géopolitique indiquant les zones d'altitudes élevées, les surfaces aquatiques, les grandes villes, les principales voies de communications terrestres et les frontières d'états.

12. Procédé selon la revendication 1,
caractérisé en ce qu'il comprend la signalisation en temps réel sur la carte numérisée, des sommets dont l'altitude est supérieure à celle de l'avion.

13. Procédé selon l'une des revendications précédentes,
caractérisé en ce que, dans le cadre de la navigation aérienne, les susdits objets sont du type balises de radio-navigation, zones particulières, routes aériennes, aéroports, informations météorologiques, positions respectives des autres véhicules situés à proximité.

14. Procédé selon l'une des revendications précédentes,
caractérisé en ce que, dans le cas de la navigation aérienne, la portion de carte peut être affichée à une échelle qui peut être modifiée par l'opérateur entre une échelle de un centimètre pour quinze kilomètres et une échelle de un centimètre pour 350 kilomètres.

15. Procédé selon l'une des revendications précédentes,
caractérisé en ce qu'il comprend la transition d'un mode de visualisation de cartes diurne à un mode nocturne et réciproquement, ladite transition étant déclenchée par une touche particulière (19) dudit terminal et consistant à remplacer les points noirs de l'image par des points blancs et les points blancs par des points noirs, les autres couleurs restant inchangées.

## Patentansprüche

1. Verfahren zur Unterstützung der Navigation eines Fahrzeugs, das ein dokumentarisches Verwaltungssystem mit Hilfe von Prozessoren verwendet, das mindestens ein Kommunikations-Endgerät mit einer Anzeigefläche (8) und Speicher einer Datenbank aufweist, in denen ein digitalisiertes Bild einer geopolitischen Karte der Region, die vom Fahrzeug durchquert werden kann, und Informationen über eine Vielzahl von Objekten unterschiedlicher Art gespeichert sind, die sich in dieser Region befinden, wobei diese Informationen für jedes Objekt repräsentative Symbole für die Art des Objekts, eine geographische Position und eine Gruppe von Informationen enthalten, wobei diese Objekte in Abhängigkeit von ihrer jeweiligen Art in Gruppen von Objekten eingeteilt sind, die je eigenen Mitteln zur Auswertung der Gruppen von Informationen zugeordnet sind, wobei das Bild in Form mindestens einer digitalen Datei gespeichert ist, die einer Datei, die auf der Karte rechteckige Zonen zu markieren erlaubt, und Dateien zugeordnet ist, die dort Geradensegmente beliebiger Ausrichtung zu markieren erlauben, wobei jedes Auswertungsmittel eine Folge von Schritten ausführt und für jeden Schritt die auf dem Bildschirm anzuzeigenden Informationen, die Anzeigeart für diese Informationen und die aktiven Tasten des Endgeräts sowie ihre Funktion definiert, wobei dieses Verfahren aufweist:
- die Erfassung der geographischen Position des Fahrzeugs in Echtzeit,
- die Eingabe der von der aktuellen Position des Fahrzeugs bis zur Bestimmungsposition zu durchfahrenen Strecke,
- die periodische Bestimmung eines Abschnitts (59) des digitalisierten Bilds, der eine geographische Zone darstellt, die sowohl die augenblickliche Position des Fahrzeugs (50) als auch einen signifikanten Abschnitt der zu durchfahrenden Strecke (51 bis 58) einschließt,
- die Anzeige des so bestimmten Bildabschnitts (59) und von Symbolen, die den Abschnitt (51 bis 58) der Strecke darstellen, auf der Anzeigefläche (8),
- die Anzeige in Echtzeit und in Überlagerung auf der Anzeigefläche (8) von einem das Fahrzeug darstellenden Symbol (50), unter Berücksichtigung seiner geographischen Position in Bezug auf die geographische Zone,
- die Auswahl mindestens einer Gruppe von Objekten durch den Navigator,
- die Auswahl durch das System unter den Informationen bezüglich der gewählten Gruppe von Objekten von denjenigen Informationen, die sich auf die Objekte beziehen, die sich in der geographischen Zone befinden,
- die Anzeige in Überlagerung auf dem Abschnitt (59) des Bilds von Symbolen, die für die so gewählten Objekte repräsentativ sind, unter Berücksichtigung ihrer geographischen Position in Bezug auf die geographische Zone, und
- die Auswahl einer der Gruppen von Objekten, die auf der Anzeigefläche vorhanden sind, durch den Navigator, und die Aktivierung des dieser Gruppe von Objekten zugeordneten Auswertungsmittels.

2. Verfahren nach Anspruch 1, das aufweist
- die Zuordnung eines Bestimmungsmittels (114) zu einer Gruppe von Objekten,
- die Bestimmung eines Symbols (110), das in Überlagerung auf dem Bildabschnitt (59) angezeigt ist und ein Objekt der Gruppe darstellt, der das Bestimmungsmittel zugeordnet ist, durch den Navigator mit Hilfe dieses Bestimmungsmittels (114) und
- die Auswertung der Einheit von Informationen, die dem so bezeichneten Objekt zugeordnet ist, mit Hilfe des der Gruppe von Objekten, zu der dieser Objekt gehört, zugeordneten Auswertungsmittels.

3. Verfahren nach einem der vorhergehenden Ansprüche, das aufweist
- die Bestimmung eines der Symbole von Objekten, die in Überlagerung auf dem Bildabschnitt (59) dargestellt sind, durch den Navigator,
- die Anzeige durch das System, entweder auf dem vollen Bildschirm oder in einem Fenster (111) in Überlagerung auf dem Kartenabschnitt (59), von detaillierten Informationen bezüglich des bestimmten Objekts (1101).

4. Verfahren nach einem der vorhergehenden Ansprüche, dadurch gekennzeichnet, daß es aufweist:
- die Aktivierung eines Bestimmungsmittels, das den Fenstern (111) zugeordnet ist, die in Überlagerung auf dem Bildschirm (8) angezeigt sind,
- die Verschiebung oder das Löschen dieser Fenster eins nach dem anderen durch den Navigator mit Hilfe des Bestimmungsmittels,
- die Speicherung der Fenster und ihres Inhalts in einer zu diesem Zweck vorgesehenen Speicherzone, und
- die Anzeige des Inhalts dieses Speichers in Überlagerung auf dem auf dem Bildschirm (8) angezeigten Bild.

5. Verfahren nach einem der vorhergehenden Ansprüche, dadurch gekennzeichnet, daß es aufweist:
- auf Anforderung des Navigators die Berechnung der Entfernung und des Kurses zwischen zwei geographischen Punkten, die vom Navigator bezeichnet werden,
- auf Anforderung des Navigators die Bestimmung einer die Wetterbedingungen berücksichtigenden optimierten Strecke zwischen der tatsächlichen Position des Fahrzeugs und der Bestimmungsposition, und
- auf Anforderung des Navigators die Bestimmung des günstigsten Flughafens, zu dem man sich in Abhängigkeit von den Wetter- und Treibstoffzwängen hin bewegen sollte, und der tatsächlichen Position des Fahrzeugs.

6. Verfahren nach einem der Ansprüche 3 bis 5, dadurch gekennzeichnet, daß die Objektsymbole und die angezeigten detaillierten Informationen provisorisch sein können.

7. Verfahren nach einem der vorhergehenden Ansprüche, dadurch gekennzeichnet, daß es die Verschiebung der auf dem Bildschirm angezeigten Karte durch den Navigator enthält, was die Beendigung der Auffrischung dieser Karte in Abhängigkeit von der Positionsbewegung des Fahrzeugs bewirkt.

8. Verfahren nach einem der vorhergehenden Ansprüche, dadurch gekennzeichnet, daß es die Bestimmung durch den Navigator von zwei geographischen Positionen (95 und 96) auf der Karte und die Anzeige durch das System in Überlagerung auf dem Bildabschnitt (59) der Entfernung, die diese beiden Positionen (95 und 96) trennt, und des zu folgenden Kurses enthält, um von der ersten Position (95) zur zweiten Position (96) zu gelangen.

9. Verfahren nach einem der Ansprüche 2 bis 8, dadurch gekennzeichnet, daß die Bestimmung einer geographischen Position durchgeführt wird, indem ihr Name oder ihre geographischen Koordinaten eingegeben werden.

10. Verfahren nach einem der vorhergehenden Ansprüche, dadurch gekennzeichnet, daß die Strecke des Fahrzeugs durch eine Einheit von parallelen Geradensegmenten (51 bis 58) angezeigt wird, die senkrecht in ihrer Mitte die Achse kreuzen, die die Ausgangsposition und die Bestimmungsposition verbindet, wobei die Segmente (51 bis 58) eine Entfernung voneinander aufweisen, die der Entfernung entspricht, die vom Fahrzeug während einer konstanten Zeitdauer mit mittlerer Geschwindigkeit zurückgelegt wird.

11. Verfahren nach einem der vorhergehenden Ansprüche, dadurch gekennzeichnet, daß die digitalisierte Karte von einer geopolitischen Karte stammt, die die Zonen großer absoluter Höhe, die Wasseroberflächen, die großen Städte, die hauptsächlichen Erd-Verbindungsstrecken und die Staatsgrenzen anzeigt.

12. Verfahren nach Anspruch 1, dadurch gekennzeichnet, daß sie die Echtzeit-Anzeige auf der digitalisierten Karte derjenigen Gipfel enthält, deren absolute Höhe höher ist als die des Flugzeugs.

13. Verfahren nach einem der vorhergehenden Ansprüche, dadurch gekennzeichnet, daß im Rahmen der Flugnavigation die erwähnten Objekte von der Art Funknavigations-Baken, besondere Zonen, Luftstraßen, Flughäfen, Wetterinformationen, jeweilige Positionen der anderen in der Nähe befindlichen Fahrzeuge sind.

14. Verfahren nach einem der vorhergehenden Ansprüche, dadurch gekennzeichnet, daß bei der Luftnavigation der Kartenabschnitt in einem Maßstab angezeigt werden kann, der vom Navigator verändert werden kann zwischen einem Maßstab von einem Zentimeter für fünfzehn Kilometer und einem Maßstab von einem Zentimeter für 350 km.

15. Verfahren nach einem der vorhergehenden Ansprüche, dadurch gekennzeichnet, daß es den Übergang von einem Tages-Kartenanzeigemodus zu einem Nachtmodus und umgekehrt enthält, wobei dieser Übergang von einer besonderen Taste (19) des Endgeräts ausgelöst wird und darin besteht, die schwarzen Punkte des Bilds durch weiße Punkte und die weißen Punkte durch schwarze zu ersetzen, wobei die anderen Farben unverändert bleiben.

## Claims

1. Method for assisting navigation on board a vehicle using a documentary management system based on processors comprising at least one communication terminal including one display surface (8) and memories storing a data base where a digitized image is stored representing a geopolitical map of the region likely to be traversed by the vehicle, and information relating to a multiplicity of objects of various natures localized in said region, these items of information comprising for each object symbols representative of the nature of the object, a geographical position and a set of information, said objects being divided according to their respective natures into a set of objects respectively associated with distinct means for exploiting the sets of information, said image being stored in the form of at least one digital file associated with a file for identifying on the map rectangular zones, and with files for marking there straight segments of any orientation, each exploitation means executing a sequence of steps and defining, for each step, the information to be displayed on the screen, the presentation mode of said information, and the active keys of the terminal, as well as their function, said method comprising :
- the real time acquisition of the geographical position of the vehicle;
- the introduction of the trajectory to be covered from the present position of the vehicle to the destination position;
- the periodical determination of a portion (59) of the digitized image representing one geographical zone including the present position of the vehicle (50) and a significant portion of the trajectory (51 to 58) to be covered ;
- displaying on the display surface (8) the image portion (59) thus determined and symbols representing said trajectory portion (51 to 58);
- displaying overprinted in real time on said display surface (8) one symbol (50) representing the vehicle while observing its geographical position with respect to said geographical zone;
- the selection made by the operator of at least one set of objects ;
- selection by the system from amongst the sets of information relating to the set of selected objects, of information relating to the objects localized in said geographical zone;
- display, by overprinting on said image portion (59) of the symbols representing the objects thus selected while observing their geographical position with respect to said geographical zone, and
- selection by the operator of one set of objects presently displayed on the display surface, and activation of the exploitation device associated with this set of objects.

2. Method according to claim 1, comprising :
- allocation of a designation device (114) to a set of objects;
- designation by the operator with the aid of said designation device (114) of a symbol (110) displayed overprinted on said image portion (59) and representing one object of the set to which the designation device is allocated, and
- exploitation of the set of information associated with the designated object with the aid of the exploitation device associated with the set of objects to which this object belongs.

3. Method according to one of the preceding claims, comprising :
- the designation by the operator of one of the symbols of objects displayed overprinted on said image portion (59) ;
- the displaying by the system, either on the full screen or in a window (111) overprinted on the map portion (59), of detailed information concerning the designated object (110).

4. Method according to one of the preceding claims, characterized in that it comprises :
- the activation of a designation device associated with the windows (111) displayed overprinted on the screen (8),
- the movement or deletion by the operator of said windows one by one with the aid of the designation device,
- storing of the windows and their contents in a storage zone provided to this effect, and
- displaying overprinted on the image displayed on the screen (8) of the contents of this memory.

5. Method according to one of the preceding claims, characterized in that it comprises :
- calculation at the operator's request of the distance and the course between two geographical points designated by the operator,
- determination at the operator's request of an optimized route whilst taking account of the weather conditions between the current position of the vehicle and the destination position, and
- determination at the operator's request of the most suitable airport for the aircraft to be directed to according to restrictions concerning the weather and fuel consumption and the current position of the vehicle.

6. Method accoding to one of claims 3 to 5, characterized in that the symbols of objects and the displayed detailed information may be of a temporary nature.

7. Method according to one of the preceding claims, characterized in that it comprises displacement by the operator of the map displayed on the screen resulting in stopping the refreshing of the latter according to the evolution of the position of the vehicle.

8. Method according to one of the preceding claims, characterized in that it comprises designation by the operator of two geographical points (95 and 96) on the map, and displaying by the system overprinted on said image portion (59) of the distance between said two positions (95 and 96) and the course to follow so as to move from the first position (95) to the second position (96).

9. Method according to one of claims 2 to 8, characterized in that the designation of a geographical position is carried out by entering its name or geographical coordinates.

10. Method according to one of the preceding claims, characterized in that the trajectory of the vehicle is indicated by a set of straight parallel segments (51 to 58) crossing perpendicularly at their middle, the axis joining the departure and destination positions, said segments (51 to 58) being spaced by a distance corresponding to the distance covered by the vehicle during a constant period at an average speed.

11. Method according to one of the preceding claims, characterized in that the digitized map originates from a geopolitical map indicating the zone of high altitudes, water surfaces, major towns, main highways and state frontiers.

12. Method according to claim 1, characterized in that it comprises the real-time signalling on the digitized map of the summits whose hight is greater than that of the aircraft.

13. Method according to one of the preceding claims, characterized in that, within the context of air-navigation, said objects are of the type of radionavigation markers, specific zones, air routes, airports, weather information, and the respective positions of other vehicles situated nearby.

14. Method according to one of the preceding claims, characterized in that, in the case of air-navigation, the map portion may be displayed on a scale which may be modified by the operator between a scale of 1 cm for 15 km and a scale of 1 cm for 350 km.

15. Method according to one of the preceding claims, characterized in that it comprises the transition from a day mode for displaying maps to a night mode and vice versa, said transition being triggered by a specific key (19) of said terminal and consisting of replacing the black points of the image by white points and the white points by black points, the remaining colors remain unchanged.
